# EUROPEAN PATENT SPECIFICATION

(11) **EP 1 610 586 B1**
(45) Date of publication and mention of the grant of the patent: **29.04.2009**
(21) Application number: 04102421.7
(22) Date of filing: 01.06.2004
(51) Int. Cl.: H04R 1/02, H04M 1/04

(54) **Speaker clearance arrangement for a communication device**
Anordnung zum Freihalten eines Lautsprechers für ein Kommunikationsgerät
Dispositif du dégagement d'un haut-parleur pour un appareil de communication

(43) Date of publication of application: 28.12.2005
(73) Proprietor: Research In Motion Limited, Waterloo, Ontario N2L 3W8 (CA)
(72) Inventor: Corley, Cortez, Waterloo, Ontario N2L 3W8 (CA); Tyneski, Frank, Waterloo, Ontario N2L 3W8 (CA); Ladouceur, Norman, Waterloo, Ontario N2L 3W8 (CA); Hawker, Larry, Waterloo, Ontario N2L 3W8 (CA)
(74) Representative: Rickard, David John

(56) References cited:
- EP-A- 1 301 013
- DE-U1- 8 903 173
- DE-U1- 29 713 766
- US-A- 5 661 798
- US-B1- 6 405 910

## Description

The invention relates to a system for enhancing audibility of signals generated by a communication device, such as a cellular phone.

A typical voice communication device, such as a cellular phone, has a receiver (speaker) located at a top portion of the device and a transducer (microphone) located at a bottom portion. A user of the device generally holds and orients it by a side of his head such that the speaker is near his ear and the microphone is near his mouth.

Additionally, the device may have hands-free functionality. One implementation of the hands-free functionality is to have a speaker located on the back of the device. However, when that device is placed on a hard flat surface like a desktop, the surface blocks the speaker and the sound from the speaker is muted and muffled.

A smaller device, such as a tiny cellular phone, has a rounded back, such that the back does not sit flat against the surface, thereby preventing the speaker from being fully blocked when lying on a flat surface. However, having a rounded back allows the device to pitch on the surface.

EP-A-1301013 discloses a mobile communication device having a distance keeping means projecting from a back surface of the device. A speaker means for hands-free operation is located internally of the device with its acoustic opening located towards the centre of the back surface. The distance keeping means is positioned above the speaker opening and a top of the device such that, when the device is placed on a flat surface with its back surface facing said flat surface, the distance keeping means keeps the acoustic opening of the speaker means spaced above the flat surface.

There is a need for a speaker arrangement for communication devices which addresses deficiencies in the prior art.

In a first aspect, the invention provides a speaker enclosure system for a communication device comprising: a casing for said communication device, said casing having a side and a casing opening in a top portion of said side; a speaker mounted inside said casing and in communication with said casing opening; a cover shaped to cover said casing opening, said cover having a speaker grill having an opening therein providing an air channel for said speaker; and a first structure and a second structure each located on a surface of said cover and protruding outwardly from said surface, said first and second structures being located on opposing sides of said speaker grill and extending towards a bottom portion of said casing such that said first and second structures extend below said speaker grill, whereby said communication device is adapted to be placed on a flat surface with said side of said casing facing said flat surface such that said first and second structures cause said side of said casing to be canted from said flat surface to expose said speaker grill to ambient air.

In the speaker enclosure system when the enclosure is placed on the flat surface, the surface is canted from the flat surface by interaction of the first and second structures and a second region on the surface.

In the speaker enclosure system, the surface may be on a back side of the enclosure.

In the enclosure, the speaker grill may be detachable from said cover.

In the speaker enclosure system, the cover may have a recessed opening underneath said speaker grill.

In the speaker enclosure system, the cover may comprises a center portion, a left flange extending from a left side of said center portion and a right flange extending from a right side of said center portion; and said first and second structures may comprise a first elevated feature located in said left flange and said center portion and a second elevated feature located in said right flange and said center portion.

In the speaker enclosure system, the first elevated feature may comprise a first rail extending along said left flange; and said second elevated feature may also comprise a first rail extending along said right flange. The first elevated feature may further comprise a second rail extending along said center portion, said second rail connected to said first rail; and said second elevated feature may further comprise a second rail extending along said center portion, said second rail connected to said first rail. For each of the two elevated features, the heights of said first rails may taper as they extend outwardly to an end of their associated flanges; and, for each of said two elevated features, the heights of the second rails may taper as they extend outwardly to an end of said center portion.

In the speaker enclosure system, each of the first rails for each of said two elevated features may be located along an end of said associated flanges; and each of said second rails for each of said two elevated features may be located along opposing ends of said center portion.

The casing may further comprises a recessed flange located beside the casing opening and a fastener hole for receiving a fastener; and the cover is further shaped to fit over said recessed flange. The cover may further comprise at least one bottom flange extending from a bottom side of said center portion. The cover may further comprise at least one alignment flange along an edge of said cover; said casing further comprises at least one opening located about said casing opening; and said at least one alignment flange is mateable with said at least one opening to secure said cover to said casing.

In other aspects various combinations of sets and subsets of the above aspects are provided.

### BRIEF DESCRIPTION OF THE DRAWINGS

The foregoing and other aspects of the invention will become more apparent from the following description of specific embodiments thereof and the accompanying drawings which illustrate, by way of example only, the invention. In the drawings, where like elements feature like reference numerals (and wherein individual elements bear unique alphabetical suffixes):

Figure 1 is a top perspective diagram of a communication device associated with an embodiment of the invention;

Figure 2 is a rear view of the communication device of Fig. 1;

Figure 3 is a side view of part of the communication device of Fig. 1;

Figure 4 is a rear perspective view of part of a bottom cover of the device of Fig. 1;

Figure 5 is a rear perspective view of part of a back casing of the device of Fig. 1;

Figure 6 is a rear perspective view of part of the back casing and a back cover of the communication device as shown in Figs. 1, 4 and 5;

Figure 7 is a rear view of a second embodiment;

Figure 8 is a side view of part of the second embodiment;

Figure 9 is a rear view of a communication device; and

Figure 10 is a side view of part of the device of Fig 9.

### DETAILED DESCRIPTION OF AN EMBODIMENT

The description which follows, and the embodiments described therein, are provided by way of illustration of an example, or examples, of particular embodiments of the present invention. These examples are provided for the purposes of explanation, and not limitation, of the invention. In the description, which follows, like parts are marked throughout the specification and the drawings with the same respective reference numerals.

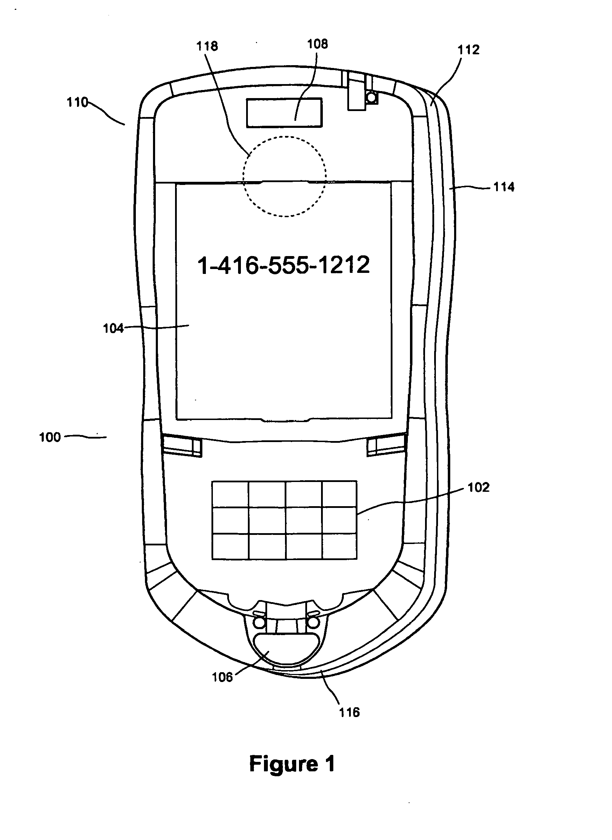

Referring to Figure 1, communication device 100 is shown. In the embodiment, communication device provides voice communications with other devices, allowing its user to hear audio signals (e.g. voices) transmitted from another device (e.g. a cellular phone). Device 100 may be a telephone, a cordless telephone, a cellular telephone, a voice-enabled personal digital assistant (PDA) or any other voice communication device. Communications may be provided via wireless systems, wired systems or a combination of both systems. As is common with voice communication devices, device 100 has a keypad 102, display 104, microphone 106 and transducer 108, i.e. speaker 108. On the back of device 100 is an additional speaker (not shown). For device 100, casing 110 provides an enclosure for its internal circuits and mechanical structures. Casing 110 includes top cover 112 and bottom cover 114 and is made from a plastic injection moulded process. Top cover 112 and bottom cover 114 meet to define an exterior perimeter of device 100 along side 116. Casing 110 may be formed from any suitable material, such as plastic and metal, or any combination of both. General internal circuits and operations of device 100 are well known in the art and are not provided here.

Device 100 provides voice communications for a user with a familiar interface. To initiate a call, the user activates device 100, enters a telephone number to be called on keypad 102 and initiates the call. After the call is connected, the user places device 100 about his mouth and one of his ears, such that microphone 106 is near his mouth and speaker 108 is near his ear. User speaks towards microphone 106 and listens for audio signals from the called party through speaker 108. Device 100 may have an external control to adjust the volume control for audio signals generated by speaker 108.

It is possible to use device 100 in a hands-free mode, by increasing the volume of sound for speaker 108. As such, the user can operate device 100 without requiring him to place device 100 and speaker 108 near his ear. Now, device 100 may be held by user in front of him, such that he can see the front of device 100 while still being able to hear received audio signals. When device 100 is held in such a position, the user may be able to simultaneously hear the received audio signals, operate keypad 102 to provide commands to device 100 and see information on display 104.

Device 100 provides an alternative hands-free mode of operation. Therein, speaker 118 is also provided on device 100. Preferably, speaker 118 is a larger transducer than speaker 108 and is generally able to produce audio signals through a wider frequency range and at higher volume levels than speaker 108. However, in other embodiments, other speakers may be used. As the front spaces of device 100 are largely occupied by keypad 102, display 104, microphone 106 and speaker 108, speaker 118 is located on the back of device 100. In other embodiments, speaker 118 may be placed on the front, top, bottom or a side of the device. In this hand-free mode, device 100 activates speaker 118 and provides an audio signal to speaker 118 to reproduce the received audio signals at a volume level which is sufficient to be heard by the user when device 100 is located in front of him.

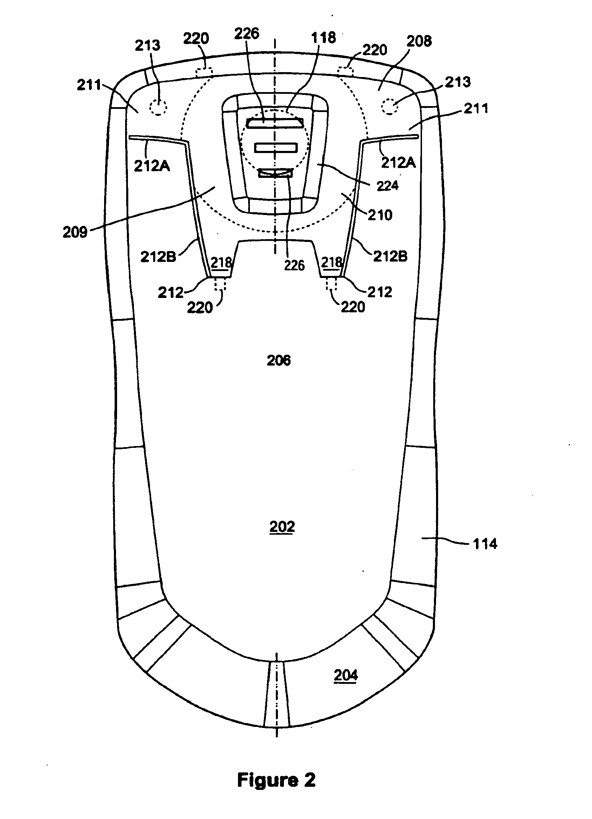

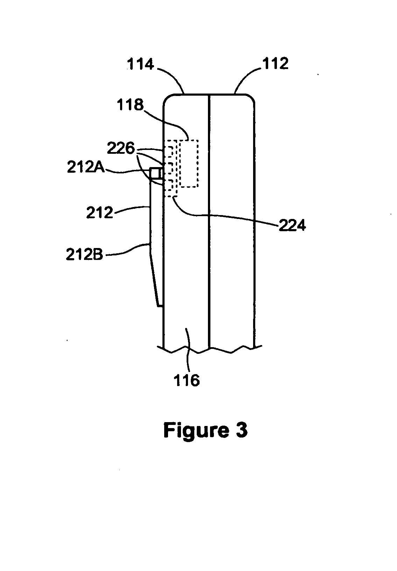

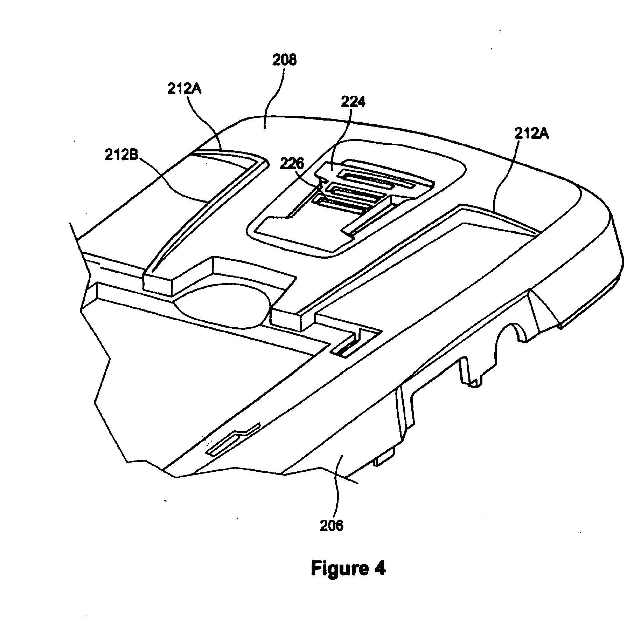

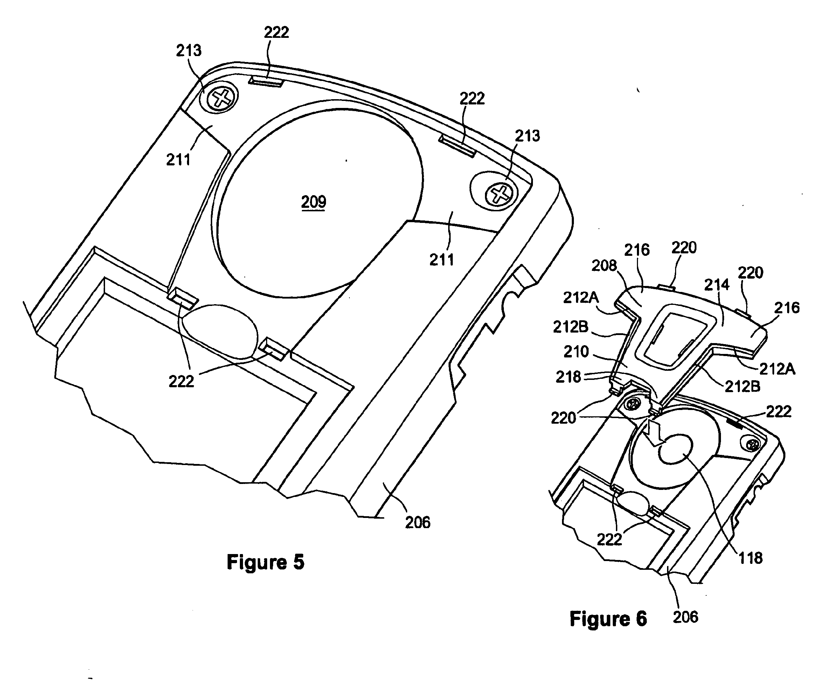

Referring to Figs. 2, 3, 4, 5 and 6, aspects of bottom cover 114 of device 100 are shown. Bottom cover 114 has an oblong-shaped surface 202 and side 204. Surface 202 is almost flat, having a slight convex shape to it. Side 204 defines a lower portion of exterior side 116 of device 100. Side 204 is rounded to provide a softer contour to bottom cover 114. In other embodiments, the back may be flat. Speaker 118 is located in the top portion of bottom cover 114. For assembly and manufacturing reasons, bottom cover 114 is made in two pieces: back casing 206 and back cover 208.

Back casing 206 provides a lower portion of bottom cover 114 and side 204. In a top portion of bottom cover 114, back casing 206 has opening 209, wherein speaker 118 is located inside device 100. Along two sides of opening 209, back casing 206 has flanges 211 that extend from the sides of back casing 206 toward opening 209. Flanges 211 are located at the sides of the opening and protrude from the internal upper surface of back casing 206. Flanges 211 contain screw holes 213 for locating securing screws (or any other equivalent fastener) which lock back casing 206 to internal structural components of device 100 (not shown).

Back cover 208 has base portion 210 and rails 212. Base portion 210 is shaped to be almost flat and fits snugly over the opening to cover it fully and to abut against an edge defined by the boundary of the opening and back casing 206. Base portion 210 has a thickness which allows it to cover the opening and flanges 211 and provide the appearance of a continual surface (but for the boundary defining the perimeter of the opening) for bottom cover 114. Base portion 210 has a center portion 214, side flanges 216 and bottom flanges 218. Extending below bottom flanges 218 are alignment flanges 220 which are mateable into openings 222 of back casing 206 to provide a friction fit between cover 208 and casing 206. In base portion 210, grill section 224 is located around its middle and provides an opening as a set of lateral slots 226. In the embodiment, grill section 224 is slightly recessed below the surface of base portion 210. When base portion 210 is fitted into the opening, in grill 224 lateral slots are located near speaker 118, allowing any sound generated therefrom to pass through them into the ambient environment of device 100. Other shapes and sizes of slots may also be used. In other embodiments, grill section 224 may not be recessed. In one embodiment, grill section 224 is integrated into base portion 210. In another embodiment, grill section 224 is removeable from base portion 210. Back cover 208 may be injected moulded plastic. The durability of the material of back cover 208 can depend on its intended operating environment.

There are two rails 212 located in a symmetric pattern about edges of base portion 210. Each rail 212 comprises two sections: rail 212A and rail 212B. Each rail 212A is located along the lower edge of a side flange 216. Each rail 212B is connected to its corresponding rail 212A and runs from the top of the exterior side of both base portion 210 and its neighbouring bottom flange 218. Rails 212 are relatively thin volumes having a rectanguloid (i.e., generally rectangular) cross-section. Preferably, rails 212 extend approximately 1 mm downward from base portion 210. However, the height of a rail 212 may change through its length. Both rails 212A and 212B are shown as having a higher height near the center of base portion 210 and then a tapering height as they progress outwardly therefrom. It will be appreciated that the height of rails in other embodiments can be set to almost any value, if aesthetics are disregarded. As Fig. 2 shows, rails 212 are located near grill section 224. Rails 212 preferably are the only significant outwardly extending feature present on back 214. This provides a clean appearance to back 214. Rails 212 may be made from a pliable form of plastic or rubber, thereby providing some shock absorption and resistance to movement when casing 206 is rested on a hard surface. In other embodiments any shaped extension, feature or protrusion which extends from the case could be suitable.

When device 100 is placed on an almost flat surface with bottom cover 114 facing the surface, there are three points of contact for device 100 to the surface: each of rails 212 and a line of contact in the lower portion of back casing 206. Each of rails 212 defines a first region of contact with the flat surface and the line of contact defines a second region of contact. Collectively, three points of contact provide a stable, non-tipping platform. As the top end of bottom cover 114 is elevated from the surface, the plane of bottom cover 114 is not coplanar with the plane of the surface. As such, grill section 224 is canted upward and away from the surface. Accordingly, speaker 118 has clearance from the surface and an air channel to the ambient environment is created. As such, audio signals can be emitted through the air channel created by the cant between bottom cover 114 and the surface. In other embodiments, the points of contact may only be the rails, provided they have sufficient length and height to support device 100.

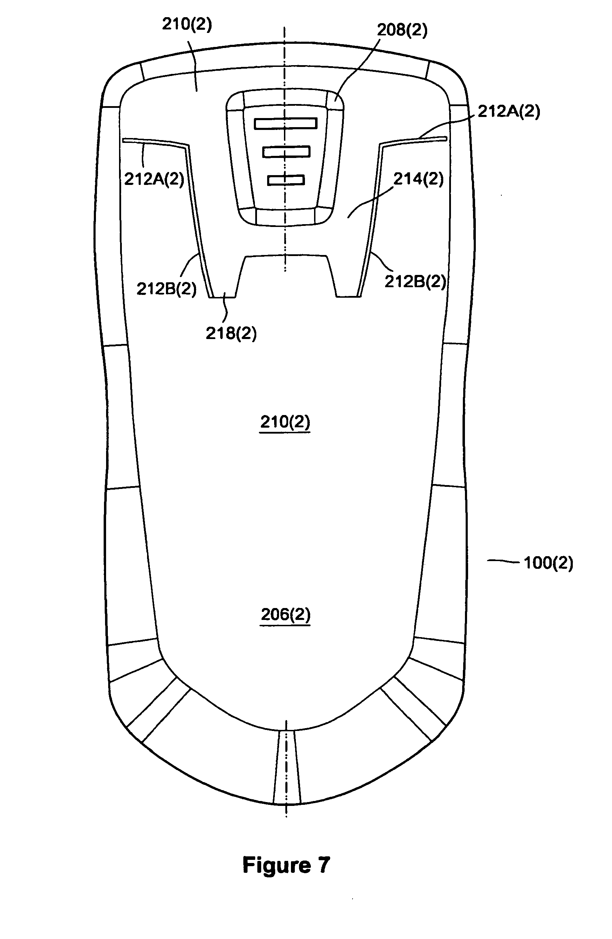

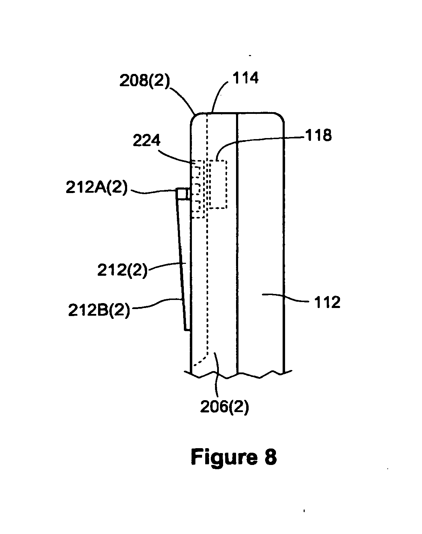

Figs. 7 and 8 show another embodiment, wherein back casing 206(2) and base portion 210(2) are dimensionally similar to back casing 206 and base portion 210. Rails 212(2) are located in the same locations on base portion 210(2). However, rails 212A(2) that are located along the sides of central portion 214(2) and bottom flanges 218(2) have a differently tapered height, compared to those in base portion 210, decreasing in height from the of rails 212A(2) in side flanges 216(2), as rails 212A(2) progress downward along bottom cover 114(2). This taper provides more points of contact when device 100(2) is placed on a surface and minimizes the visual prominence of rails 212A(2) on back 214(2).

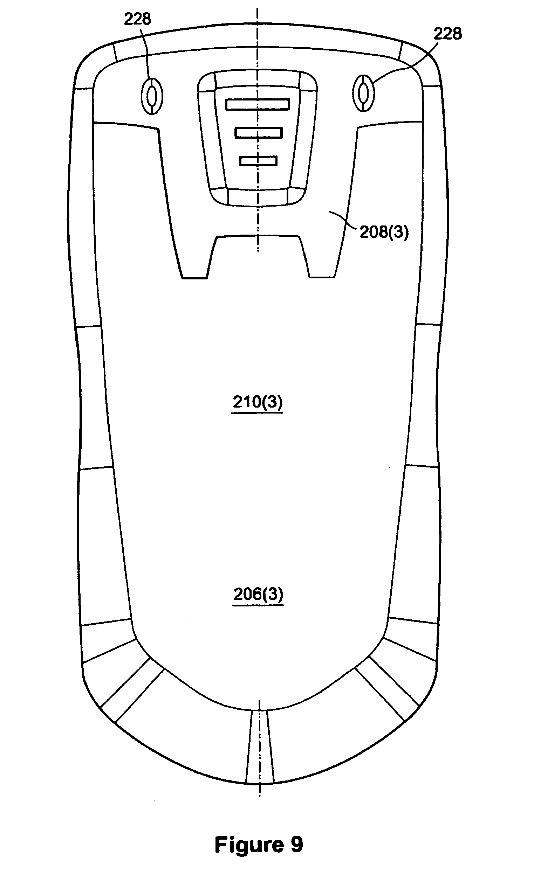

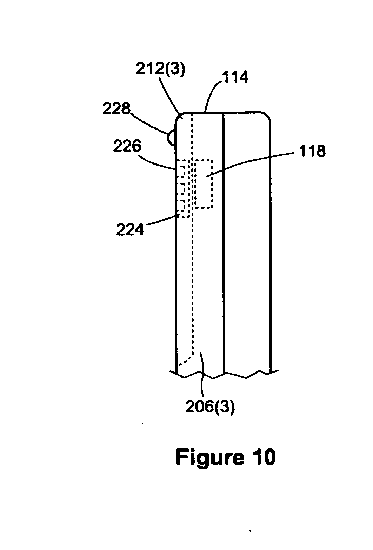

Figs. 9 and 10 show an embodiment of a communication device which is useful for understanding the invention but which does not fall within the scope of the appended claims, wherein back casing 206(3) and base portion 210(3) are dimensionally similar to back casing 206 and base portion 210.
Two nubs 228 extend outwardly from an upper region of base portion 210(3) and are located in a symmetrical pattern in view of the grill and the bottom of back casing 206(3). In other embodiments 1, 2, 3 or more nubs may be provided at different locations on back 214. Nubs 228 provide a similar prop to cant back 214B from a surface.

It will be appreciated that covers 208, 208(2) and 208(3) are dimensionally identical regarding the interface to back casing 206. As such, the covers can be interchanged, as needed.

It will be appreciated that an aspect of the embodiment provides a structural means for a case of a communication device to be canted from a surface thereby allowing a speaker located in the case to be exposed to ambient air. Ambient air accesses the speaker through a speaker grill in the case, where the grill has a series of openings therein. Accordingly, in other embodiments, rails on the back may be placed towards an opposite end of the location of the larger speaker. Alternatively, the rails or nub may be placed on the back casing. Further, the structural means may be any shaped structural element(s) protruding from the case to appropriately cant the case to expose it to ambient air. For example, other structural elements may be disks, domes, bumps, blocks or the like. Alternatively still, the back casing may be a single piece with cover integrated into the back casing as one piece.

Although the invention has been described with reference to certain specific embodiments, various modifications thereof will be apparent to those skilled in the art without departing from the scope of the invention as outlined in the claims appended hereto.

## Claims

1. A speaker enclosure system for a communication device (100), said enclosure system comprising:
a casing (206) for said communication device, said casing having a side and a casing opening (209) in a top portion of said side;
a speaker (118) mounted inside said casing and in communication with said casing opening (209);
a cover (208) shaped to cover said casing opening (209), said cover having a speaker grill (224) having an opening (226) therein providing an air channel for said speaker; and
a first structure and a second structure (212) each located on a surface of said cover and protruding outwardly from said surface, said first and second structures (212) being located on opposing sides of said speaker grill (224) and extending towards a bottom portion of said casing (206) such that said first and second structures (212) extend below said speaker grill (224),
whereby said communication device is adapted to be placed on a flat surface with said side of said casing facing said flat surface such that said first and second structures cause said side of said casing to be canted from said flat surface to expose said speaker grill to ambient air.

2. The speaker enclosure system as claimed in claim 1, wherein
when said casing (206) is placed on said flat surface, said side is canted from said flat surface by contact of said first and second structures and a second region on said side with said flat surface.

3. The speaker enclosure system as claimed in claim 1 or claim 2, wherein said side is a back side of said casing (206).

4. The speaker enclosure system as claimed in any one of claims 1 to 3, wherein said speaker grill (224) is detachable from said cover (208).

5. The speaker enclosure system as claimed in claim 4, wherein said cover (208) has a recessed opening underneath said speaker grill.

6. The speaker enclosure system of claim 2 or any one of claims 3 to 5 when dependent on claim 2, wherein said first and second structures located in a symmetrical pattern about said cover (208) converge as they extend towards a bottom portion of said casing (206).

7. The speaker enclosure system as claimed in any one of claims 1 to 6, wherein:
said cover (208) comprises a center portion (214), a left flange (216) extending from a left side of said center portion (214) and a right flange (216) extending from a right side of said center portion (214); and
said first and second structures comprise a first elevated feature (212) located in said left flange (216) and said center portion (214) and a second elevated feature (212) located in said right flange (216) and said center portion (214).

8. The speaker enclosure system as claimed in claim 7, wherein:
said first elevated feature (212) comprises a first rail (212A) extending along said left flange (216); and
said second elevated feature (212) comprises a first rail (212A) extending along said right flange (216).

9. The speaker enclosure system as claimed in claim 8, wherein:
said first elevated feature (212) further comprises a second rail (212B) extending along said center portion (214), said second rail connected to said first rail; and
said second elevated feature (212) further comprises a second rail (212B) extending along said center portion (214), said second rail connected to said first rail.

10. The speaker enclosure system as claimed in claim 9, wherein:
for each of said two elevated features, the heights of said first rails (212A) taper as they extend outwardly to an end of their associated flanges (216); and
for each of said two elevated features, the heights of said second rails (212B) taper as they extend outwardly to an end of said center portion (214).

11. The speaker enclosure system as claimed in claim 9 or claim 10, wherein:
each of said first rails (212A) for each of said two elevated features is located along an end of said associated flanges; and
each of said second rails (212B) for each of said two elevated features is located along opposing ends of said center portion (214).

12. The speaker enclosure system as claimed in any one of claims 1 to 11, wherein:
said casing (206)further comprises a recessed flange (211) located beside said casing opening (209) and a fastener hole (213) for receiving a fastener; and
said cover (208) is further shaped to fit over said recessed flange (211).

13. The speaker enclosure system as claimed in any one of claims 1 to 12, wherein said cover (208) further comprises at least one bottom flange (218) extending from a bottom side of said center portion (214).

14. The speaker enclosure system as claimed in any one of claims 1 to 13, wherein:
said cover (208) further comprises at least one alignment flange (220) along an edge of said cover (208);
said casing (206) further comprises at least one opening (222) located about said casing opening (209); and
said at least one alignment flange (220) is mateable with said at least one opening (222) to secure said cover (208) to said casing (206).

15. The speaker enclosure system of any one of claims 1 to 14, wherein the first and second structures are made of a pliable form of plastic or rubber.

16. The speaker enclosure system of any one of the preceding claims, wherein the cover (208) is interchangeable with another cover (208(2), 208(3)) being dimensionally identically shaped to cover said casing opening (209).

17. A communication device (100) having the speaker enclosure system of any one of claims 1 to 16.

## Patentansprüche

1. Lautsprecherumschließungssystem für ein Kommunikationsgerät (100), wobei das Umschließungssystem umfasst:
ein Gehäuse (206) für das Kommunikationsgerät, wobei das Gehäuse eine Seite und eine Gehäuseöffnung (209) in einem oberen Abschnitt der Seite aufweist;
einen Lautsprecher (118), der in dem Gehäuse montiert ist und in Verbindung mit der Gehäuseöffnung (209) steht;
eine Abdeckung (208), die geformt ist, um die Gehäuseöffnung (209) abzudecken,
wobei die Abdeckung ein Lautsprechergitter (224) aufweist, das eine Öffnung (226) darin aufweist, welche einen Luftkanal für den Lautsprecher schafft; und eine erste Struktur und eine zweite Struktur (212), die jeweils auf einer Oberfläche der Abdeckung angeordnet sind und von der Oberfläche nach außen vorstehen,
wobei die erste und zweite Struktur (212) an gegenüberliegenden Seiten des Lautsprechergitters (224) angeordnet sind und sich zu einem unteren Abschnitt des Gehäuses (206) hin erstrecken, so dass sich die erste und zweite Struktur (212) unter das Lautsprechergitter (224) erstrecken,
wobei das Kommunikationsgerät angepasst ist, um auf einer ebenen Oberfläche mit der Seite des Gehäuses, die sich gegenüber der ebenen Oberfläche befindet, platziert zu werden, so dass die erste und zweite Struktur bewirken, dass die Seite des Gehäuses von der ebenen Oberfläche her in Schräglage gebracht wird, um das Lautsprechergitter der Umgebungsluft auszusetzen.

2. Lautsprecherumschließungssystem gemäß Anspruch 1, wobei,
wenn das Gehäuse (206) auf der ebenen Oberfläche platziert ist, die Seite über den Kontakt der ersten und zweiten Struktur und eines zweiten Bereichs auf der Seite mit der ebenen Oberfläche von der ebenen Oberfläche her in Schräglage gebracht wird.

3. Lautsprecherumschließungssystem gemäß Anspruch 1 oder Anspruch 2, wobei die Seite eine Hinterseite des Gehäuses (206) ist.

4. Lautsprecherumschließungssystem gemäß einem der Ansprüche 1 bis 3, wobei das Lautsprechergitter (224) von der Abdeckung (208) abnehmbar ist.

5. Lautsprecherumschließungssystem gemäß Anspruch 4, wobei die Abdeckung (208) eine ausgesparte Öffnung unter dem Lautsprechergitter aufweist.

6. Lautsprecherumschließungssystem nach Anspruch 2 oder einem der Ansprüche 3 bis 5 bei Abhängigkeit von Anspruch 2, wobei die erste und zweite Struktur, die in einem symmetrischen Muster um die Abdeckung (208) herum angeordnet sind, konvergieren, während sie sich zu einem unteren Abschnitt des Gehäuses (206) hin erstrecken.

7. Lautsprecherumschließungssystem gemäß einem der Ansprüche 1 bis 6, wobei:
die Abdeckung (208) einen mittleren Abschnitt (214), einen sich von einer linken Seite des mittleren Abschnitts (214) her erstreckenden linken Flansch (216) und
einen sich von einer rechten Seite des mittleren Abschnitts (214) her erstreckenden rechten Flansch (216) umfasst; und
die erste und zweite Struktur ein in dem linken Flansch (216) und dem mittleren Abschnitt (214) angeordnetes erstes erhöhtes Merkmal (212) und ein in dem rechten Flansch (216) und dem mittleren Abschnitt (214) angeordnetes zweites erhöhtes Merkmal (212) umfassen.

8. Lautsprecherumschließungssystem gemäß Anspruch 7, wobei:
das erste erhöhte Merkmal (212) eine erste Schiene (212A) umfasst, die sich entlang dem linken Flansch (216) erstreckt; und
das zweite erhöhte Merkmal (212) eine erste Schiene (212A) umfasst, die sich entlang dem rechten Flansch (216) erstreckt.

9. Lautsprecherumschließungssystem gemäß Anspruch 8, wobei:
das erste erhöhte Merkmal (212) ferner eine zweite Schiene (212B) umfasst, die sich entlang dem mittleren Abschnitt (214) erstreckt, wobei die zweite Schiene mit der ersten Schiene verbunden ist; und
das zweite erhöhte Merkmal (212) ferner eine zweite Schiene (212B) umfasst, die sich entlang dem mittleren Abschnitt (214) erstreckt, wobei die zweite Schiene mit der ersten Schiene verbunden ist.

10. Lautsprecherumschließungssystem gemäß Anspruch 9, wobei:
für jedes der zwei erhöhten Merkmale sich die Höhen der ersten Schienen (212A) verjüngen, während sie sich zu einem Ende ihrer zugehörenden Flansche (216) hin nach außen erstrecken; und
für jedes der zwei erhöhten Merkmale sich die Höhen der zweiten Schienen (212B) verjüngen, während sie sich zu einem Ende des mittleren Abschnitts (214) hin nach außen erstrecken.

11. Lautsprecherumschließungssystem gemäß Anspruch 9 oder Anspruch 10, wobei:
jede der ersten Schienen (212A) für jedes der zwei erhöhten Merkmale entlang einem Ende der zugehörenden Flansche angeordnet ist; und
jede der zweiten Schienen (212B) für jedes der zwei erhöhten Merkmale entlang gegenüberliegenden Enden des mittleren Abschnitts (214) angeordnet ist.

12. Lautsprecherumschließungssystem gemäß einem der Ansprüche 1 bis 11, wobei:
das Gehäuse (206) ferner einen neben der Gehäuseöffnung (209) angeordneten versenkten Flansch (211) und ein Befestigungsloch (213) zum Aufnehmen eines Befestigungselements umfasst; und
die Abdeckung (208) ferner geformt ist, um passgenau über dem versenkten Flansch (211) aufzuliegen.

13. Lautsprecherumschließungssystem gemäß einem der Ansprüche 1 bis 12, wobei die Abdeckung (208) ferner mindestens einen unteren Flansch (218) umfasst, der sich von einer Unterseite des mittleren Abschnitts (214) her erstreckt.

14. Lautsprecherumschließungssystem gemäß einem der Ansprüche 1 bis 13, wobei:
die Abdeckung (208) ferner mindestens einen Ausrichtungsflansch (220) entlang einer Kante der Abdeckung (208) umfasst;
das Gehäuse (206) ferner mindestens eine um die Gehäuseöffnung (209) herum angeordnete Öffnung (222) umfasst; und
der mindestens eine Ausrichtungsflansch (220) passgenau mit der mindestens einen Öffnung (222) verbunden werden kann, um die Abdeckung (208) an dem Gehäuse (206) zu befestigen.

15. Lautsprecherumschließungssystem gemäß einem der Ansprüche 1 bis 14, wobei die erste und zweite Struktur aus einer biegsamen Form von Kunststoff oder Gummi hergestellt sind.

16. Lautsprecherumschließungssystem gemäß einem der vorangehenden Ansprüche,
wobei die Abdeckung (208) mit einer anderen Abdeckung (208(2), 208(3)) austauschbar ist, welche zum Abdecken der Gehäuseöffnung (209) dimensional identisch geformt ist.

17. Kommunikationsgerät (100) mit dem Lautsprecherumschließungssystem gemäß einem der Ansprüche 1 bis 16.

## Revendications

1. Un système d'enceinte de haut-parleur pour un dispositif de communication (100), ledit système d'enceinte comportant :
un boîtier (206) pour ledit dispositif de communication, ledit boîtier ayant une face et une ouverture de boîtier (209) dans une portion du haut de ladite face ;
un haut-parleur (118) monté à l'intérieur dudit boîtier et en communication avec ladite ouverture de boîtier (209) ;
un couvercle (208) profilé pour couvrir ladite ouverture de boîtier (209), ledit couvercle ayant une grille de haut-parleur (224) ayant une ouverture (226) fournissant un canal d'air pour ledit haut-parleur ; et
une première structure et une deuxième structure (212) chacune située sur une surface dudit couvercle et faisant saillie vers l'extérieur à partir de ladite surface, lesdites première et deuxième structures (212) étant situées sur des côtés opposés de ladite grille de haut-parleur (224) et s'étendant vers une portion du bas dudit boîtier (206) de telle sorte que lesdites première et deuxième structures (212) s'étendent sous ladite grille de haut-parleur (224),
grâce à quoi ledit dispositif de communication est adapté pour être placé sur une surface plate, ladite face dudit boîtier faisant face à ladite surface plate de telle sorte que lesdites première et deuxième structures amènent ladite face dudit boîtier à être inclinée par rapport à ladite surface plate pour exposer ladite grille de haut-parleur à l'air ambiant.

2. Le système d'enceinte de haut-parleur tel que revendiqué dans la revendication 1, dans lequel
lorsque ledit boîtier (206) est placé sur ladite surface plate, ladite face est inclinée par rapport à ladite surface plate par contact desdites première et deuxième structures et d'une deuxième région sur ladite face avec ladite surface plate.

3. Le système d'enceinte de haut-parleur tel que revendiqué dans la revendication 1 ou la revendication 2, dans lequel ladite face est une face arrière dudit boîtier (206).

4. Le système d'enceinte de haut-parleur tel que revendiqué dans n'importe laquelle des revendications 1 à 3, dans lequel ladite grille de haut-parleur (224) est détachable dudit couvercle (208).

5. Le système d'enceinte de haut-parleur tel que revendiqué dans la revendication 4, dans lequel ledit couvercle (208) a une ouverture renfoncée sous ladite grille de haut-parleur.

6. Le système d'enceinte de haut-parleur de la revendication 2 ou de n'importe laquelle des revendications 3 à 5 lorsque dépendantes de la revendication 2, dans lequel lesdites première et deuxième structures situées dans une configuration symétrique sur ledit couvercle (208) convergent à mesure qu'elles s'étendent vers une portion du bas dudit boîtier (206).

7. Le système d'enceinte de haut-parleur tel que revendiqué dans n'importe laquelle des revendications 1 à 6, dans lequel :
ledit couvercle (208) comporte une portion centrale (214), un flasque gauche (216) s'étendant à partir d'un côté gauche de ladite portion centrale (214) et un flasque droit (216) s'étendant à partir d'un côté droit de ladite portion centrale (214) ; et
lesdites première et deuxième structures comportent un premier élément surélevé (212) situé dans ledit flasque gauche (216) et ladite portion centrale (214) et un deuxième élément surélevé (212) situé dans ledit flasque droit (216) et ladite portion centrale (214).

8. Le système d'enceinte de haut-parleur tel que revendiqué dans la revendication 7, dans lequel :
ledit premier élément surélevé (212) comporte une première rainure (212A) s'étendant le long dudit flasque gauche (216) ; et
ledit deuxième élément surélevé (212) comporte une première rainure (212A) s'étendant le long dudit flasque droit (216).

9. Le système d'enceinte de haut-parleur tel que revendiqué dans la revendication 8, dans lequel :
ledit premier élément surélevé (212) comporte de plus une deuxième rainure (212B) s'étendant le long de ladite portion centrale (214), ladite deuxième rainure étant connectée à ladite première rainure ; et
ledit deuxième élément surélevé (212) comporte de plus une deuxième rainure (212B) s'étendant le long de ladite portion centrale (214), ladite deuxième rainure étant connectée à ladite première rainure.

10. Le système d'enceinte de haut-parleur tel que revendiqué dans la revendication 9, dans lequel :
pour chacun desdits deux éléments surélevés, les hauteurs desdites premières rainures (212A) s'effilent à mesure qu'elles s'étendent vers l'extérieur jusqu'à une extrémité de leurs flasques associés (216) ; et
pour chacun desdits deux éléments surélevés, les hauteurs desdites deuxièmes rainures (212B) s'effilent à mesure qu'elles s'étendent vers l'extérieur jusqu'à une extrémité de ladite portion centrale (214).

11. Le système d'enceinte de haut-parleur tel que revendiqué dans la revendication 9 ou la revendication 10, dans lequel :
chacune desdites premières rainures (212A) pour chacun desdits deux éléments surélevés est située le long d'une extrémité desdits flasques associés ; et
chacune desdites deuxièmes rainures (212B) pour chacun desdits deux éléments surélevés est située le long d'extrémités opposées de ladite portion centrale (214).

12. Le système d'enceinte de haut-parleur tel que revendiqué dans n'importe laquelle des revendications 1 à 11, dans lequel :
ledit boîtier (206) comporte de plus un flasque renfoncé (211) situé à côté de ladite ouverture de boîtier (209) et un orifice pour pièce de fixation (213) pour recevoir une pièce de fixation ; et
ledit couvercle (208) est de plus profilé pour s'adapter sur ledit flasque renfoncé (211).

13. Le système d'enceinte de haut-parleur tel que revendiqué dans n'importe laquelle des revendications 1 à 12, dans lequel ledit couvercle (208) comporte de plus au moins un flasque du bas (218) s'étendant à partir d'un côté du bas de ladite portion centrale (214).

14. Le système d'enceinte de haut-parleur tel que revendiqué dans n'importe laquelle des revendications 1 à 13, dans lequel :
ledit couvercle (208) comporte de plus au moins un flasque d'alignement (220) le long d'un bord dudit couvercle (208) ;
ledit boîtier (206) comporte de plus au moins une ouverture (222) située à proximité de ladite ouverture de boîtier (209) ; et
ledit au moins un flasque d'alignement (220) peut être accouplé à ladite au moins une ouverture (222) pour assujettir ledit couvercle (208) audit boîtier (206).

15. Le système d'enceinte de haut-parleur de n'importe laquelle des revendications 1 à 14, dans lequel les première et deuxième structures sont faites d'une forme pliable de plastique ou de caoutchouc.

16. Le système d'enceinte de haut-parleur de n'importe laquelle des revendications précédentes, dans lequel le couvercle (208) est interchangeable avec un autre couvercle (208(2), 208(3)) profilé selon des dimensions identiques pour couvrir ladite ouverture de boîtier (209).

17. Un dispositif de communication (100) ayant le système d'enceinte de haut-parleur de n'importe laquelle des revendications 1 à 16.
